# EUROPÄISCHE PATENTANMELDUNG

(11) **EP 3 173 834 A1**
(43) Veröffentlichungstag der Anmeldung: **31.05.2017**
(21) Anmeldenummer: 16191115.1
(22) Anmeldetag: 28.09.2016
(51) Int. Cl.: G02B 6/44, H02G 3/04

(54) **ROHRVERBUND AUS MIKROKABELROHREN**

(30) Priorität: 30.11.2015 DE 202015106501 U
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(57) **Zusammenfassung**

Gegenstand der Erfindung ist ein Rohrverbund aus Mikrokabelrohren (1) zur Aufnahme und Führung von beispielsweise Lichtwellenleitern, Lichtwellen(leiter)kabeln (2), Telefonkabeln etc., mit einer Umhüllung (5, 5'), welche die einzelnen Mikrokabelrohre (1) zusammenfasst. Dabei sind einzelne oder sämtliche Mikrokabelrohre (1) mit zumindest einem Kennzeichenstreifen (3) ausgerüstet. Erfindungsgemäß ist der Kennzeichnungsstreifen (3) als das betreffende Mikrokabelrohr (1) umfangsseitig und vollflächig umschließende Deckschicht (3) des Mikrokabelrohres (1) ausgebildet.

## Beschreibung

Die Erfindung betrifft einen Rohrverbund aus Mikrokabelrohren zur Aufnahme und Führung von beispielsweise Lichtwellenleitern, Lichtwellen(leiter)kabeln, Telefonkabeln etc., mit einer Umhüllung, welche die einzelnen Mikrokabelrohre zusammenfasst, wobei einzelne oder sämtliche Mikrokabelrohre mit zumindest einem Kennzeichenstreifen ausgerüstet sind.

Aus der Praxis sind Mikrokabelrohre bekannt, also Kabelrohre mit verringertem Durchmesser, der im Allgemeinen Werte für den Außendurchmesser von bis zu 40 mm aufnimmt. Solche Mikrokabelrohre werden unter anderem von der Firma Rehau hergestellt und unter der Kennzeichnung "Rauspeed Mikrokabelrohrsystem" vermarktet.

Da im Regelfall eine Vielzahl von Mikrokabelrohren zum Rohrverbund zusammengefasst wird und hierzu die Mikrokabelrohre mit der Umhüllung umschlossen werden, haben sich Farbkennzeichnungen der Mikrokabelrohre als günstig zur Unterscheidung erwiesen. Tatsächlich lassen sich auf diese Weise die einzelnen Mikrokabelrohre und darin geführte Lichtwellenleiterkabel voneinander einfach unterscheiden, was für die Realisierung von insbesondere Glasfaser-Netzarchitekturen von besonderer Bedeutung ist.

Dazu werden die fraglichen Mikrokabelrohre im Regelfall in der Erde bis zum nächsten Kabelverzweiger bzw. bis ein Gebäude verlegt. Die Unterscheidung und Wiedererkennung der einzelnen Mikrokabelrohre wird nun mit Hilfe der ein- oder aufgebrachten Farbstreifen ermöglicht. Dadurch kann das betreffende Mikrokabelrohr beispielsweise einem spezifischen Gebäude respektive einer bestimmten Wohnung in einem Gehäuse zugeordnet werden. Durch die Bündelung der Mikrokabelrohre und ihre Zusammenfassung mit Hilfe der Umhüllung wird die Verlegung, insbesondere Erdverlegung, und spätere Verzweigung vereinfacht. Beispielsweise beschreibt das Gebrauchsmuster DE 20 2010 015 853 U1 eine Einzelzugabdichtung, die insbesondere dazu dient, die vorerwähnten Mikrokabelrohre im Bereich von Hausanschlüssen abzudichten.

Um die einzelnen Mikrokabelrohre mit typischerweise Glasfaserkabeln zu bestücken, wird im Allgemeinen auf handelsübliche Einblasgeräte zurückgegriffen. Ein Rohrverbund aus Kabelrohren und Mikrokabelrohren der eingangs beschriebenen Ausgestaltung wird in der DE 10 2010 017 147 A1 vorgestellt. In dem Rohrverbund können Kabelrohre bzw. Rohre mit verschiedenen Rohrdurchmessern und/oder Querschnittsformen zusammengefasst werden. Auch variierende Farben oder Farbkennzeichnungen der einzelnen Kabelrohre werden in diesem Zusammenhang angesprochen. Es bleibt jedoch offen, wie die jeweilige Farbkennzeichnung vorgenommen wird.

Tatsächlich kennt man aus der Praxis grundsätzlich zwei verschiedene Vorgehensweisen. Zum einen wird mit Farbstreifen gearbeitet, die zur Unterscheidung der einzelnen Mikrokabelrohre dienen und offensichtlich nachträglich bzw. nach der Fertigung mit einem Farbauftragsgerät auf die äußere Mantelfläche des jeweiligen Mikrokabelrohres aufgebracht werden. Alternativ hierzu sind aus der Praxis auch Mikrokabelrohre bekannt, die mit einer Farbe durchgefärbt werden. In diesem Fall werden entsprechende Farbpigmente in beispielsweise ein Kunststoffgranulat zur Herstellung des jeweiligen Mikrokabelrohres eingebracht.

Die bekannten Vorgehensweisen zur Ausrüstung einzelner oder sämtlicher Kabelrohre mit zumindest einem Kennzeichenstreifen sind mit Nachteilen behaftet. So besteht bei den nachträglich aufgebrachten Farbstreifen die Gefahr, dass der Farbstreifen bei der anschließenden Zusammenfassung zu dem Rohrverbund oder bei der nachträglichen Verlegung oder Erdverlegung beschädigt wird. Außerdem sind Verschmutzungen des Farbstreifens möglich. Ganz abgesehen davon lässt sich ein solcher Farbstreifen oftmals nur aus einem bestimmten Blickwinkel zweifelsfrei erkennen, insbesondere bei ungünstigen Licht- und Umweltbedingungen, wie sie oftmals bei der Erdverlegung herrschen. Das alles führt dazu, dass Probleme bei der Identifizierung beobachtet werden.

Solche Identifizierungsprobleme sind bei durchgefärbten Mikrokabelrohren zwar meistens nicht zu befürchten. Allerdings führt die Durchfärbung insgesamt dazu, dass ein Benutzer nicht erkennen kann, ob beispielsweise das betreffende Mikrokabelrohr belegt ist oder nicht. Das heißt, aufgrund der Durchfärbung lässt sich nicht feststellen, ob im Innern des betreffenden Mikrokabelrohres ein Lichtwellenleiterkabel vorhanden ist oder vielmehr ein Leerrohr vorliegt. Das erschwert die Handhabung und Verlegung sowie den Aufbau von entsprechenden Netzwerken. Hier will die Erfindung insgesamt Abhilfe schaffen.

Der Erfindung liegt das technische Problem zugrunde, einen derartigen Rohrverbund aus Mikrokabelrohren so weiter zu entwickeln, dass die Funktionssicherheit gesteigert ist und Probleme bei der Verlegung nicht (mehr) auftreten.

Zur Lösung dieser technischen Problemstellung ist ein gattungsgemäßer Rohrverbund aus Mikrokabelrohren im Rahmen der Erfindung dadurch gekennzeichnet, dass der Kennzeichenstreifen als das betreffende Mikrokabelrohr umfangsseitig und vollflächig umschließende Deckschicht des Mikrokabelrohres ausgebildet ist. D.h., das Mikrokabelrohr setzt sich aus wenigstens einer Materialschicht im Innern und der Deckschicht an der Oberfläche zusammen. Dabei fungiert die Deckschicht als Kennzeichenstreifen.

Im Rahmen der Erfindung wird also zunächst einmal so vorgegangen, dass der Kennzeichenstreifen nicht (mehr) nachträglich auf die Materialschicht als beispielsweise Farbauftrag bzw. Farbstreifen aufgebracht wird. Vielmehr handelt es sich bei dem Kennzeichenstreifen um eine Deckschicht für die fragliche Materialschicht. Die Deckschicht umschließt die Materialschicht umfangsseitig und vollflächig, so dass ausdrücklich die gesamte Oberfläche des betreffenden und erfindungsgemäßen Mikrokabelrohres zur Kennzeichnung genutzt wird.

In diesem Zusammenhang hat es sich als besonders günstig erwiesen, wenn die Deckschicht in Verbindung mit der Materialschicht als Koextrusionsschicht ausgebildet ist. Das heißt, die Deckschicht und die Materialschicht werden zusammen extrudiert, koextrudiert. Dadurch kann von vornherein und herstellungsseitig die Auslegung so getroffen werden, dass die Deckschicht die Materialschicht umschließt, und zwar umfangsseitig und vollflächig. Bei der Deckschicht handelt es sich im Regelfall um eine Farbschicht. Das heißt, die Deckschicht ist meistens farbig ausgebildet.

Hierzu werden typischerweise einem Kunststoffgranulat zur Herstellung der Deckschicht Farbpigmente beigemischt, um die farbige Auslegung der Deckschicht zu erreichen. Die Deckschicht lässt sich hierdurch mit einer durchgängig gleichen Färbung ausrüsten. Es sind aber auch variierende Färbungen, Streifenfärbungen, Punktfärbungen etc. denkbar.

Grundsätzlich kann die Deckschicht aber auch einen anderen Kennzeichencharakter aufweisen, beispielsweise mit einer Bedruckung oder eingelagerten Zeichen wie Buchstaben oder Zahlen ausgerüstet werden. Auch ein Barcode, QR-Code etc. lässt sich auf diese Weise realisieren und gleichsam in die Deckschicht integrieren. In jedem Fall übernimmt die Deckschicht insgesamt eine kennzeichnende Funktion und schützt die betreffende Kennzeichnung aufgrund ihres Schichtcharakters vor Beschädigungen, Verschmutzungen etc.

Außerdem sorgt die umfangsseitige und vollflächig umschließende Auslegung der Deckschicht dafür, dass ihr kennzeichnender Charakter von einer beliebigen Blickrichtung aus zweifelsfrei ermittelt werden kann. Das erleichtert die anschließende Verlegung des beispielsweise im Innern aufgenommenen Lichtwellenleiterkabels oder Glasfaserkabels. Hinzu kommt, dass der Charakter des Kennzeichenstreifens als Deckschicht nach wie vor einen Blick auf das Innere des betreffenden Mikrokabelrohres zulässt bzw. entschieden werden kann, ob das Mikrokabelrohr mit einem Lichtwellenleiterkabel belegt ist oder nicht.

Tatsächlich ist die Deckschicht zumindest teilweise transparent ausgebildet. Da die Deckschicht im Regelfall farbig ausgelegt ist und meistens über eine durchgängig gleiche Färbung verfügt, korrespondiert die teilweise Transparenz der Deckschicht dazu, dass ein bestimmter und eine Belegung bzw. Nicht-belegung des Innern des Mikrokabelrohres ermöglichender Transmissionsgrad beobachtet wird.

So empfiehlt die Erfindung, dass die Deckschicht vorteilhaft einen Transmissionsgrad gegenüber sichtbarem Licht von mehr als 10 % aufweist. Vorzugsweise wird sogar ein Transmissionsgrad von mehr als 20 % beobachtet. Der Transmissionsgrad kann insgesamt sogar Werte bis zu 80 % und vorzugsweise bis zu 50 % annehmen.

Wie üblich stellt der Transmissionsgrad ein Maß für die transmittierte Lichtintensität, vorliegend im sichtbaren Bereich, dar. Das heißt, ein Transmissionsgrad von beispielsweise 10 % korrespondiert dazu, dass zumindest 10 % der Lichtintensität des sichtbaren Lichtes von der Deckschicht durchgelassen wird. Da die an die Deckschicht innenseitig anschließende Materialschicht im Regelfall transparent ausgelegt ist, das heißt Transmissionsgrade von 90 % und mehr (für sichtbares Licht) aufweist, führt dies insgesamt dazu, dass zumindest ein Teil des sichtbaren Lichtes bis ins Innere des solchermaßen ausgelegten Mikrokabelrohres dringt. Dadurch kann ein Bediener zweifelsfrei von außen erkennen, ob das fragliche Mikrokabelrohr mit beispielsweise einem Lichtwellenleiterkabel belegt ist oder nicht.

Tatsächlich führt nämlich eine Belegung des Mikrokabelrohres im Innern mit einem Lichtwellenleiterkabel im Beispielfall dazu, dass das betreffende Mikrokabelrohr insgesamt dunkel und folglich intransparent erscheint, wohingegen die Nichtbelegung aufgrund der geschilderten Transmissionsgrade dazu korrespondiert, dass zumindest eine wenn auch schwache Lichtdurchlässigkeit beobachtet wird. Selbstverständlich ist der Unterschied zwischen Belegung und Nichtbelegung noch größer, wenn der Transmissionsgrad der Deckschicht mehr als 20 % und beispielsweise bis zu 50 % oder sogar 80 % beträgt. In jedem Fall lässt sich die Belegung/Nichtbelegung des betreffenden Mikrokabelrohres ebenso unzweifelhaft von einem Bediener feststellen wie die farbige Kennzeichnung im Beispielfall. Dadurch lässt sich das betreffende Mikrokabelrohr eindeutig identifizieren.

In diesem Zusammenhang kann beispielsweise so vorgegangen werden, dass die Deckschicht eine durchgängig gleiche Färbung aufweist und die Mikrokabelrohre als Bestandteil des erfindungsgemäßen Rohrverbundes mit jeweils unterschiedlichen Grundfarben ausgerüstet sind, beispielsweise eine grün, blau, rot, gelb etc. gefärbte Deckschicht aufweisen. Um die Kennzeichnungsmöglichkeiten noch zu vergrößern, besteht selbstverständlich im Rahmen der Erfindung die Möglichkeit, mit mehrfarbigen Deckschichten zu arbeiten.

In diesem Zusammenhang ist es denkbar, die Deckschicht mit zwei Farben, beispielsweise rot-gelb, schwarz-grün, blau-weiß etc. auszurüsten, um die denkbaren Kombinationsmöglichkeiten zu erhöhen. Dabei versteht es sich, dass die einzelnen Farben in der Deckschicht im Regelfall flächenmäßig gleich verteilt sind. Das heißt, die Deckschicht kann beispielsweise mit den betreffenden Farben im Sinne einer Spiralstreifenfärbung ausgerüstet sein. Es ist aber auch möglich, eine Grundfarbe und die andere Farbe als Punkte auszulegen. Ebenso kann die Deckschicht hälftig in die beiden Farben unterteilt werden.

In jedem Fall ermöglicht die Erfindung eine funktionssichere Bedienung und Handhabung des Rohrverbundes und eröffnet die zusätzliche Möglichkeit, die Belegung respektive Nichtbelegung einzelner Mikrokabelrohre zweifelsfrei feststellen zu können. Das gelingt durch den Rückgriff auf die die Materialschicht umfangsseitig und vollflächig umschließende und als Kennzeichenstreifen ausgebildete Deckschicht. Da die Deckschicht und die Materialschicht im Regelfall als Koextrusionsschicht ausgebildet sind bzw. koextrudiert werden, lässt sich der erfindungsgemäße Rohrverbund zugleich kostengünstig herstellen, ist jedenfalls nicht mit Mehrkosten gegenüber den herkömmlichen Vorgehensweisen verbunden. Hierin sind die wesentlichen Vorteile zu sehen.

Im Regelfall weist die Deckschicht eine Schichtdicke von bis zu ca. 0,5 mm auf. Vorzugsweise beträgt die Schichtdicke 0,3 mm und kann ganz besonders bevorzugt bei bis zu ca. 0,2 mm liegen. Das jeweilige Mikrokabelrohr im Ganzen verfügt im Allgemeinen über eine Schichtdicke von ca. 0,5 mm und mehr. Die Schichtdicke des Mikrokabelrohres setzt sich dabei aus der Schichtdicke der inneren Materialschicht zuzüglich der Schichtdicke der die innere Materialschicht umfangsseitig und vollflächig umschließenden Deckschicht zusammen. Insbesondere kann die Schichtdicke des Mikrokabelrohres Werte von ca. 1 mm und mehr annehmen. Bevorzugt werden Schichtdicken im Bereich von ca. 1 mm bis 4 mm beobachtet.

Das Mikrokabelrohr weist im Allgemeinen einen Außendurchmesser von mehr als 5 mm auf. Insbesondere werden Werte für den Außendurchmesser von mehr als 10 mm und maximal Werte von bis zu 40 mm beobachtet. Vorzugsweise beträgt der Außendurchmesser des jeweiligen Mikrokabelrohres bis zu maximal 30 mm. Dabei hat sich insgesamt eine Schichtdicke der Mikrokabelrohre von ca. 1,5 mm und mehr als günstig erwiesen, wenn eine direkte Erdverlegung gewünscht wird.

Das Mikrokabelrohr ist im Allgemeinen aus einem thermoplastischen Kunststoff hergestellt. Hierbei können geeignete Kunststoffe wie beispielsweise Polyethylen (PE), Polypropylen (PP) oder dergleichen zum Einsatz kommen. Auch Kunststoffmischungen sind selbstverständlich denkbar und werden von der Erfindung umfasst. Auch die Umhüllung ist im Allgemeinen aus einem thermoplastischen Kunststoff gefertigt. In diesem Fall kommen ebenfalls Kunststoffe wie PE, PP oder dergleichen zum Einsatz. Außerdem können die Mikrokabelrohre und die Umhüllung koextrudiert sein, um insgesamt die Herstellungskosten des solchermaßen realisierten erfindungsgemäßen Rohrverbundes auf ein Minimum zu reduzieren.

Dabei übernimmt die Umhüllung erfindungsgemäß eine zweifache Funktion. Zunächst einmal verhindert die Umhüllung, dass die im Innern befindlichen und zusammengefassten Kabelrohre aufspleißen bzw. ihre durch die Umhüllung vorgegebene Ordnung verlieren. Zu diesem Zweck kann die Umhüllung als Kunststoffschlauch um die Kabelrohre gelegt und aufgeschrumpft werden. Dadurch steht in Längsrichtung des Rohrverbundes eine durchgängige Ummantelung zur Verfügung, welcher verhindert, dass die auf diese Weise zusammengefassten Mikrokabelrohre aufspleißen. Alternativ oder zusätzlich zu einer durchgängigen Umhüllung kann aber auch mit sektionsweise aufgebrachten Manschetten als Umhüllung gearbeitet werden. In diesem Fall sorgen die fraglichen Manschetten für die notwendige Fixierung der einzelnen Mikrokabelrohre im Innern und verhindern wie die durchgängige Ummantelung ein etwaiges Aufspleißen. Als weitere Funktion der Umhüllung ist zu berücksichtigen, dass mit ihrer Hilfe die im Innern befindlichen Mikrokabelrohre insbesondere bei der abschließenden Verlegung und vorzugsweise Erdverlegung keinen Schaden nehmen. Das heißt, die Umhüllung sorgt zusätzlich für einen mechanischen Schutz der Mikrokabelrohre in ihrem Inneren. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1A und 1B: einen erfindungsgemäßen Rohrverbund aus Mikrokabelrohren in schematischer Seitenansicht teilweise aufgebrochen und
- Fig. 2: einen Schnitt durch den Gegenstand nach den Fig. 1A bzw. 1 B in Verbindung mit einem vergrößerten Teilausschnitt.

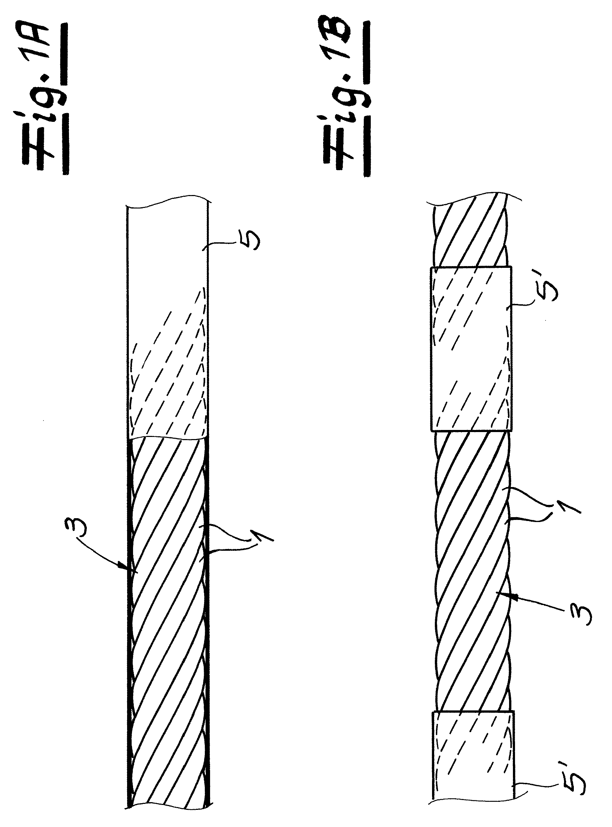

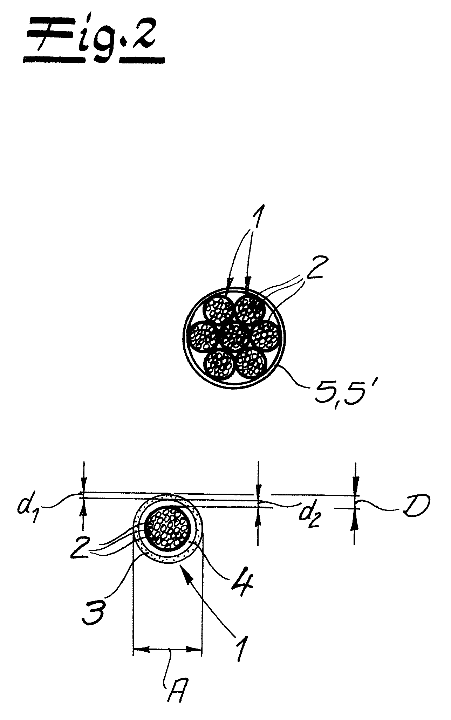

In den Fig. 1A und 1 B ist prinzipiell und in Seitenansicht ein Rohrverbund aus Mikrokabelrohren 1 dargestellt. Die jeweiligen Mikrokabelrohre 1 dienen zur Aufnahme von Lichtwellenleiterkabeln 2 in ihrem Innern, die man am besten in der Schnittdarstellung gemäß Fig. 2 erkennt oder erkennen kann. Tatsächlich wird im jeweiligen Mikrokabelrohr 1 ein Bündel an Glasfasern bzw. Lichtwellenleiterkabeln 2 aufgenommen, mit deren Hilfe ein Glasfasernetzwerk aufgebaut werden kann. Dazu müssen die einzelnen Mikrokabelrohre 1 mit ihren Lichtwellenleiterkabeln 2 im Innern identifiziert und entsprechend verlegt werden. Zu diesem Zweck sind einzelne oder sämtliche Mikrokabelrohre 1 mit zumindest einem Kennzeichenstreifen 3 ausgerüstet, den man am besten in der Schnittdarstellung der Fig. 2 erkennen kann.

Die einzelnen Mikrokabelrohre 1 werden mit einer Umhüllung 5, 5' zusammengefasst. Im Rahmen der Variante nach der Fig. 1A ist eine durchgängige Umhüllung 5 realisiert, die vorliegend als Schrumpfschlauch 5 ausgebildet ist oder ausgebildet sein kann. Die Variante nach der Fig. 1 B zeigt dagegen eine Umhüllung 5', die sich aus einzelnen Manschetten 5' zusammensetzt und sektionsweise die Mikrokabelrohre 1 zusammenfasst. Im Rahmen der Variante nach den Fig. 1A und 1B sind die einzelnen Mikrokabelrohre 1 miteinander verseilt. Dagegen zeigt die Fig. 2 eine Variante, bei welcher die Mikrokabelrohre 1 eine zueinander parallele Längserstreckung aufweisen.

Der bereits angesprochene Kennzeichenstreifen 3 des jeweiligen Mikrokabelrohres 1 ist im Ausführungsbeispiel und erfindungsgemäß als das betreffende Mikrokabelrohr 1 umfangseitig und vollflächig umschließende Deckschicht 3 des Mikrokabelrohres 1 ausgebildet. Tatsächlich setzt sich das Mikrokabelrohr 1 aus einer transparenten Materialschicht 4 im Innern und der daran nach außen hin anschließenden und die Materialschicht 4 umfangseitig und vollflächig umschließenden Deckschicht 3 zusammen. Bei der Deckschicht 3 handelt es sich im Rahmen des Ausführungsbeispiels nicht einschränkend um eine Farbschicht. Das heißt, die Deckschicht 3 ist farbig ausgebildet und verfügt zu diesem Zweck über eingelagerte Farbpigmente. Dadurch weist die Deckschicht 3 eine durchgängig gleiche Färbung auf. Selbstverständlich kann auch mit über die Deckschicht 3 unterschiedlich verteilten Farbpigmenten gearbeitet werden. Auch liegt es im Rahmen der Erfindung, in der Deckschicht 3 Farbpigmente unterschiedlicher Farben einzulagern. In jedem Fall erfolgt mit Hilfe der Deckschicht 3 bzw. des Kennzeichenstreifens 3 eine Identifizierung des betreffenden Mikrokabelrohres 1. Die Identifizierung findet vorliegend und erfindungsgemäß durch eine Farbcodierung statt.

Die Deckschicht 3 ist zumindest teilweise transparent ausgebildet. Die Materialschicht 4 verfügt dagegen über eine vollständige Transparenz gegenüber sichtbarem Licht, weist also einen Transmissionsgrad von 90 % und mehr auf. Dagegen wird für die Deckschicht 3 ein Transmissionsgrad gegenüber sichtbarem Licht von mehr als 10 % und vorzugsweise von mehr als 20 % beobachtet. Der Transmissionsgrad der Deckschicht 3 kann Werte bis zu 50 % und maximal bis zu 80 % annehmen.

In Verbindung mit der transparenten Materialschicht 4 kann folglich ein Bediener durch einen Blick auf das betreffende Mikrokabelrohr 1 zweifelsfrei entscheiden, ob das betreffende Mikrokabelrohr 1 mit den Lichtwellenleiterkabeln 2 in Innern belegt ist oder nicht. Bei einer Belegung mit den Lichtwellenleiterkabeln 2 erscheint das betreffende Mikrokabelrohr 1 insgesamt dunkel und lichtundurchlässig, wohingegen eine Nichtbelegung mit den Lichtwellenleiterkabeln 2 im Beispielfall dazu korrespondiert, dass zumindest ein Teil des sichtbaren Lichtes durch das betreffende Mikrokabelrohr 1 hindurchgelangt und dieses wenigstens leicht durchsichtig sowie farbig erscheint. Auf diese Weise kann der Bediener nicht nur das betreffende Mikrokabelrohr 1 aufgrund der Farbcodierung und mit Hilfe des Kennzeichenstreifens bzw. der Deckschicht 3 eindeutig identifizieren, sondern zugleich auch zweifelsfrei feststellen, dass und ob das betreffende Mikrokabelrohr 1 im Innern mit den Lichtwellenleiterkabeln 2 belegt ist oder nicht.

Die Deckschicht 3 weist eine Schichtdicke d₁ auf, die bis zu ca. 0,5 mm betragen kann. Vorzugsweise liegt die Schichtdicke d₁ bei bis zu ca. 0,3 mm und ganz besonders bevorzugt bei bis zu ca. 0,2 mm. Die Schichtdicke d₂ der Materialschicht 4 liegt im Bereich von ca. 0,3 mm und mehr. Das jeweilige Mikrokabelrohr 1 verfügt demzufolge über eine Schichtdicke D = d₁ + d₂ von ca. 0,5 mm und mehr. Insbesondere wird eine Schichtdicke D von ca. 1 mm beobachtet. Im Allgemeinen liegt die Schichtdicke D des Mikrokabelrohres 1 im Bereich von ca. 1 mm bis 4 mm.

Der Außendurchmesser A des Mikrokabelrohres 1 beträgt im Regelfall mehr als 5 mm. Insbesondere werden Außendurchmesser A von mehr als 10 mm beobachtet. Maximal bemisst sich der Außendurchmesser A des Mikrokabelrohres 1 zu 40 mm und vorzugsweise bis zu maximal 30 mm.

Die Deckschicht 3 ist insgesamt als Farbschicht ausgebildet und folglich farbig ausgelegt. Dazu werden bei der Herstellung entsprechende Farbpigmente in ein Kunststoffgranulat eingebracht. Tatsächlich werden die Deckschicht 3 und die Materialschicht 4 im Regelfall koextrudiert und sind folglich als Koextrusionsschichten ausgelegt. Dabei kommen typischerweise thermoplastische Kunststoffe wie beispielsweise PE, PP usw. für die Deckschicht 3 und die Materialschicht 4 zum Einsatz.

Die Umhüllung 5 bzw. 5' ist ebenfalls und bevorzugt aus einem thermoplastischen Kunststoff hergestellt. Auch in diesem Fall können Kunststoffe wie PE, PP usw. zum Einsatz kommen. Außerdem hat es sich als besonders günstig und vorteilhaft erwiesen, wenn die Mikrokabelrohre 1 und die Umhüllung 5, 5' koextrudiert werden. Dadurch lässt sich die Herstellung des erfindungsgemäßen Rohrverbundes besonders einfach und kostengünstig realisieren.

## Patentansprüche

1. Rohrverbund aus Mikrokabelrohren (1) zur Aufnahme und Führung von beispielsweise Lichtwellenleitern, Lichtwellen(leiter)kabeln (2), Telefonkabeln etc., mit einer Umhüllung (5, 5'), welche die einzelnen Mikrokabelrohre (1) zusammenfasst, wobei einzelne oder sämtliche Mikrokabelrohre (1) mit zumindest einem Kennzeichenstreifen (3) ausgerüstet sind, **dadurch gekennzeichnet, dass** der Kennzeichenstreifen (3) als das betreffende Mikrokabelrohr (1) umfangseitig und vollflächig umschließende Deckschicht (3) des Mikrokabelrohres ausgebildet ist.

2. Rohrverbund nach Anspruch 1, **dadurch gekennzeichnet, dass** die Deckschicht (3) in Verbindung mit einer Materialschicht (4) als Koextrusionsschicht (3, 4) ausgebildet ist.

3. Rohrverbund nach Anspruch 1 oder 2, **dadurch gekennzeichnet, dass** die Deckschicht (3) eine Schichtdicke (d₁) bis zu ca. 0,5 mm, vorzugsweise bis zu 0,3 mm und ganz besonders bevorzugt bis zu ca. 0,2 mm aufweist.

4. Rohrverbund nach einem der Ansprüche 1 bis 3, **dadurch gekennzeichnet, dass** das jeweilige Mikrokabelrohr (1) eine Schichtdicke (D) von ca. 0,5 mm und mehr, insbesondere ca. 1 mm und mehr sowie bevorzugt von ca. 1 mm bis 4 mm aufweist.

5. Rohrverbund nach einem der Ansprüche 1 bis 4, **dadurch gekennzeichnet, dass** das jeweilige Mikrokabelrohr (1) einen Außendurchmesser (A) von mehr als 5 mm, insbesondere mehr als 10 mm und maximal bis zu ca. 40 mm sowie vorzugsweise bis maximal 30 mm aufweist.

6. Rohrverbund nach einem der Ansprüche 1 bis 5, **dadurch gekennzeichnet, dass** die Deckschicht (3) farbig ausgebildet ist.

7. Rohrverbund nach Anspruch 6, **dadurch gekennzeichnet, dass** die Deckschicht (3) eine durchgängig gleiche Färbung aufweist.

8. Rohrverbund nach einem der Ansprüche 1 bis 7, **dadurch gekennzeichnet, dass** die Deckschicht (3) zumindest teilweise transparent ist und einen Transmissionsgrad gegenüber sichtbarem Licht von mehr als 10%, vorzugsweise von mehr als 20 % und bis zu ca. 50 %, maximal bis zu ca. 80 %, aufweist.

9. Rohrverbund nach einem der Ansprüche 1 bis 8, **dadurch gekennzeichnet, dass** die Materialschicht (4) transparent ausgebildet ist.

10. Rohrverbund nach einem der Ansprüche 1 bis 9, **dadurch gekennzeichnet, dass** das Mikrokabelrohr (1) aus einem thermoplastischen Kunststoff, beispielsweise PE, PP etc., hergestellt ist.

11. Rohrverbund nach einem der Ansprüche 1 bis 10, **dadurch gekennzeichnet, dass** die Umhüllung 5, 5' aus einem thermoplastischen Kunststoff wie beispielsweise PE, PP usw. hergestellt ist.

12. Rohrverbund nach einem der Ansprüche 1 bis 11, **dadurch gekennzeichnet, dass** die jeweiligen Mikrokabelrohre (1) und die Umhüllung (5, 5') koextrudiert sind.
